# EUROPEAN PATENT SPECIFICATION

(11) **EP 2 425 475 B1**
(45) Date of publication and mention of the grant of the patent: **21.05.2014**
(21) Application number: 10769244.4
(22) Date of filing: 13.04.2010
(51) Int. Cl.: H01M 2/12

(54) **BATTERY WITH BATTERY SAFETY VENT**
BATTERIE MIT BATTERIESICHERHEITSENTLÜFTUNG
BATTERIE AVEC ÉVENT DE SÉCURITÉ

(30) Priority: 30.04.2009 CN 200920131253 U
(43) Date of publication of application: 07.03.2012
(73) Proprietor: Byd Company Limited, Shenzhen 518118 (CN)
(72) Inventor: ZHU, Jianhua, Guangdong 518118 (CN); LAI, Qing, Guangdong 518118 (CN); PI, Wenya, Guangdong 518118 (CN); JIANG, Luxia, Guangdong 518118 (CN)
(74) Representative: HOFFMANN EITLE
(86) International application number: PCT/CN2010/071729
(87) International publication number: WO 2010/124555

(56) References cited:
- CN-Y- 2 704 119
- CN-Y- 201 156 559
- CN-Y- 201 408 794
- JP-A- 8 293 293
- JP-A- 2007 287 624
- JP-U- H01 112 561
- US-A- 3 214 300
- US-A- 3 455 482
- US-A1- 2006 263 676

## Description

### BACKGROUND OF THE INVENTION.

### Field of the Invention

The present invention generally relates to battery safety field, in particular relates to an explosion-proof vent device and the battery with the same.

### Description of the Related Art

With enhancing of human's environmental consciousness, the electric vehicles (EV) and hybrid electric vehicles (HEV) are becoming an inevitable trend for substituting the conventional vehicles. Power battery group as a core power source of the electric vehicles becomes more and more important.

The power battery carried in a vehicle is required to have great rate performance and safety performance, and the safety issue of the battery is mainly to solve the explosion problem in abominable conditions. To avoid explosions, an explosion-proof structure is normally added to the battery structure.

For power batteries, it's required to have high self capacity, the volume thereof will be big. Meanwhile the shell of the battery will be relatively thickened. In this case, the conventional method of forming indentation on the shell may not satisfy the explosion-proof requirements. While the explosion-proof structure with a metal film serving as explosion-proof film welded on the cover plate may be of simple in process and low cost, however the starting pressure is not stable.

Safety valves for a sealed battery according to the prior art may use a metallic rupture disc (foil or film) that seal a through hole in the battery can (see JP 2007-287624 A). In the event of an increase in the internal pressure inside the battery, the metallic rupture disc may break at a given pressure.

Document JP 8-293293 A is directed to a safety valve for a battery where an opening in a battery can is sealed by a sealing body. The sealing body has a through hole sealed by an elastic film and a seal valve made from a conducting material, the end portion of which is made to face the elastic film. In normal operating conditions the safety valve establishes an electric connection from a power generating element to a terminal. When a first set internal pressure value is exceeded, the film expands and pushes the safety valve upwards. This breaks the electric connection between the power generating element and the terminal. If the pressure further increases, the film will eventually rupture and the pressure built up inside the battery can is released.

To better define the event of rupturing of a film, safety valves according to the prior art may have sharp pins or needle heads that pierce the sealing film or foil, if it expands under an increase of the internal pressure inside the battery (see US 3,214,300 A, CN 201 156 559 Y, JP H01-112561 U, and CN 2 704 119 Y).

### SUMMARY OF THE INVENTION

The present invention is directed to solve the problem of delayed pressure releasing and to provide a battery comprising an explosion-proof battery safety vent according to claim 1 with improved pressure releasing ability.

According to the present invention, there is provided a battery safety vent comprising a film to be fixed on a battery cover plate; a safety vent cover covering above the film and having a pressure release aperture; and a pin disposed at a top of the safety vent cover, in which a free head of the pin is blunt and points to the film.

Also, there is provided a battery comprising an electric core, a shell housing the electric core, a cover plate disposed on an end surface of the shell and formed with a gas releasing aperture; and a battery safety vent disposed on the cover plate and around the gas releasing aperture, in which the battery safety vent is the battery safety vent according to the present invention.

The safety vent may help to release the pressure timely without pressure releasing delay. While the internal pressure of the battery reaches certain degree, the film swells towards the pin and then get in touch with the free head of the pin. With increasing of the battery internal pressure, the free head continues to press the film, so that the film is under the internal pressure of the battery and the pressure of the free head, the internal stress of the film is increased. When the stress exceeds the stress limit of the safety vent, the safety vent will break in large scales to release the battery internal pressure.

### DESCRIPTION OF THE DRAWINGS

Fig 1 is a schematic section view showing connecting of the safety vent and the cover plate of the battery according embodiment 1.
Fig 2 is a schematic section view showing connecting of the safety vent and the cover plate of the battery according embodiment 2.

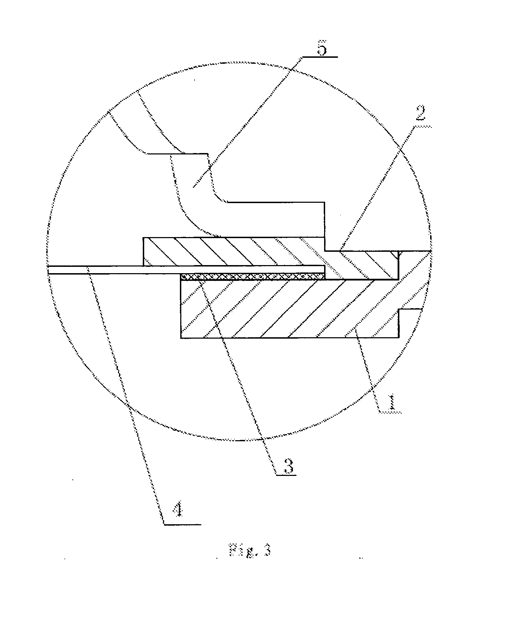

Fig 3 is a partial and enlarged view of part A in Fig 1.

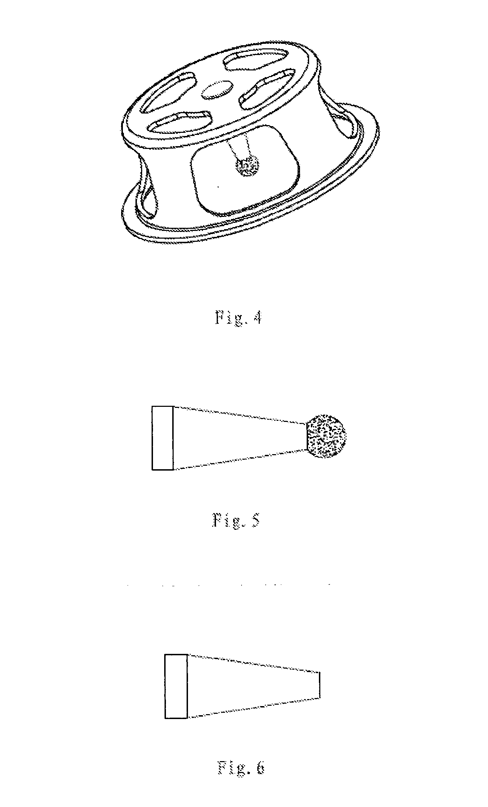

Fig 4 is a perspective view of the safety vent.
Fig 5 is a schematic view of the pin with a spherical free head.
Fig 6 is a schematic view of the pin with a flat and circular head.

### DETAILED DESCRIPTION OF THE EMBODIMENTS

An explosion-proof battery safety vent according to an embodiment of the present invention will be described. The battery safety vent comprises a film to be fixed on a cover plate of a battery and an safety vent cover. The safety vent cover covers above the film, and the safety vent cover is formed with a pressure release aperture. A pin is disposed on the top of the pin, and the free head of the pin points to the film and is blunt.

The above mentioned blunt shape is a shape that the free head has an smooth surface, and has certain contact area with the film during work and can break the film. The free head may have a flat, spherical, ellipsoidal or wave shape.

In some embodiments of the present invention, to fix the film and the safety vent cover on the battery cover plate, a base is provided and disposed around the external periphery of the gas releasing aperture on the battery cover plate, and the film is fixed on the base.

In some embodiments of the present invention, the base has a pressing ring structure, for example, it may be a round ring, an ellipse ring, a square ring, a triangle ring or other ring structure. In some embodiments of the present invention, the base is round ring.

There is no special limit to the material of the base, In some embodiments of the present invention, the material of the base is preferably identical with that of the cover plate, such as stainless steel or Aluminum.

In some embodiments of the present invention, the inner side of the bottom of the base is formed with grooves for disposing the films, and the width of the groove is about 50-90%, preferably 70-80%, of that of the base ring.

The film is used to cover the gas releasing apertures on the cover plate of the battery, and to separate the internal portion of the battery from the safety vent so as to form two pressure system. The film may be directly fixed on the battery cover plate, or it may be fixed on the base.

The fixing of the film may use any kinds of method, for example, welding (laser welding, electronics beam welding, ultrasonic wave welding and so on), adhering, riveting and so on. In some embodiments of the present invention, the welding is used.

There is no limit to the shape of the film, the shape may be circular, square, ellipse or other shapes. The film is fixed on the base, so that the shape of the film may be adapted to that of the base. In some embodiments of the present invention, the film is circular.

The film may be of metal foil or plastic, in some embodiments of the present invention, the film may be of metal foil, more preferably, the film is of Cu foil, or stainless steel foil.

The thickness of the film is about 0.005-0.5mm, preferably, 0.005-0.02mm. The thickness of the film may be selected based on different starting break pressures.

In some embodiments of the present invention, the safety vent further comprises a pressing ring, and the pressing ring presses the film so as to secure the film and to improve the air tightness. Especially, when the stainless steel is employed as film and welding is selected, the pressing ring may decrease the operation difficulty of welding.

In some embodiments of the present invention, the shape and size of the pressing ring is adapted to the edges of the films.

When the film is fixed on the base, the pressing ring is located underneath the film. Because the groove is formed at the bottom portion of the base, during fixing, the base needs to be turned upside down, and the pressing ring pressings and fix the film.

When the film is directly fixed on the cover plate, the pressing ring is located above the film.
alternatively, the safety vent cover may be fixed on the base.

When the safety vent cover is fixed on the base, the bottom shape of the safety vent cover is adapted to that of the base.

The height of the safety vent cover may be adjusted within a range according to the exhausting area and space.

On the top and the side surface of the safety vent there are formed with a plurality of pressure releasing apertures. To timely release pressure when the battery is in abnormal situations, the total area of the pressure releasing is larger than or equal to the that of the gas releasing apertures.

The top surface of the safety vent cover has an insert hole, and the pin is fixed in the insert hole. The insert hole may or may not pass through the top of the safety vent cover.

There is a relatively small distance between the free head of the pin and the film, but the free head and the film do not contact with each other.

The pin may be made of various metals. In some embodiments of the present invention, stainless steel and steel with nickel plating are used.

The free head of the pin is not a tine, but blunt. In some embodiments of the present invention, the free head of the pin is spherical or flat.

When the film is circular and the free head of the pin is spherical, the radius ratio of the free head and the film is about 1:7∼1:10.

The free head of the pin is distributed with hard particles, the size of the hard particle is 50-500 mesh, preferably about 100-300 mesh, the size of the hard particle may be decided based on different requirements of the pressure.

The shape, hardness and size of the hard particle on the free head of the pin may be adjusted to achieve different starting explosion pressures, thus to provide a big range of the starting pressure of the safety vent. High mesh particles may cause high starting pressure of the film and lower mesh particles may cause low starting pressure of the film.

The pin does not have weak point at the free head and it will not be easily broken during work or turnover, so that the manufacturing process is easy to control and the yield rate is high.

As a result of the process, the distance between the free head and the film in each battery may vary in a small range. For the present pin with tine free head, even though the distance varies in a small range, it will have a big effect on the starting explosion pressure.

With the structure of the free head according to the present invention, when varying in the small range, the starting pressure of the battery is mainly affected by the internal stress and may limit the effect of the small range variation to the starting pressure of the battery, thus improving the consistency of the starting pressure of the safety vent.

According to the present invention, a battery is provided, wherein the battery comprises an electric core, a shell housing the electric core, a cover plate disposed on an end surface of the shell and formed with a gas releasing aperture; and a battery safety vent disposed on the cover plate and around the gas releasing aperture, in which the battery safety vent is the above mentioned battery safety vent.

A welding groove is formed on the cover plate around the periphery of the gas releasing aperture for disposing and welding the safety vent. The periphery diameter is about 0.01-0.2mm, preferably 0.01-0.05mm, greater than that of the base.

The present invention will further be explained in conjunction with the detailed embodiments and with reference to the drawings.

### Embodiment 1

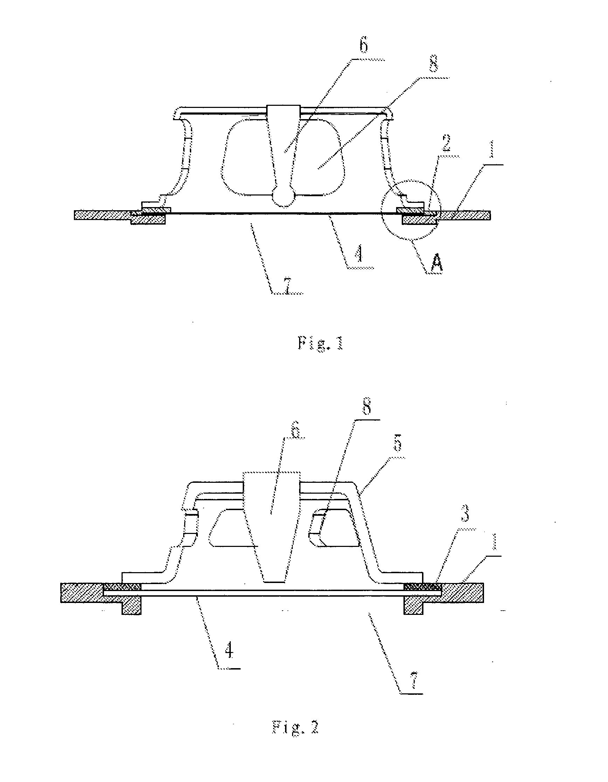

As shown in Fig 1, the battery comprises an electric core, a shell, a cover plate 1 and a safety vent. The electric core is housed in the shell, and the cover plate 1 is disposed on the end surface of the shell. The cover plate 1 is formed with a gas releasing aperture 7 and a welding groove is formed on the cover plate 1 around the edge of the gas releasing aperture 7. The safety vent is welded in the welding groove on the battery cover plate 1.

The battery safety vent comprises a base 2, a pressing ring 3, a film 4, an safety vent cover 5 and a pin 6.

The base 2 is welded in the welding groove and the base 2 is a stainless steel base having a ring shape.

A groove is formed at inner side of the bottom portion of the base 2. The width of the groove is about 70% of that of the base.

The film 4 is welded in the above groove, and the film is of stainless steel foil with a thickness of about 0.01mm. The shape and size of the film 4 is round and adapted to the groove.

The pressing ring 3 presses the edge of the film and is welded on the film 4, the pressing ring 3 is of stainless steel, and the shape and size thereof are adapted to the edges of the film 4.

The safety vent cover 5 is welded on the base 2, and the safety vent cover 5 is a hollow cylinder. The bottom shape of the safety vent cover 5 is adapted to the base 2.

The top and side surface of the safety vent cover 5 is formed with a plurality of pressure releasing apertures 8, and the total area of the pressure releasing aperture 8 is 1.5 times of that of the gas releasing hole 7.

A round insert hole is formed in the center of the top portion of the safety vent 5, and the pin 6 is welded in the insert hole. The free head of the pin 6 faces downwards in a manner that a certain distance is reserved between the free head of the pin 6 and the film 4.

The pin 6 has an spherical free head, and the radius ratio of the spherical free head and the film is 1:9. The pin 6 has diamond particle with a size of 200 mesh on the free head.

### Embodiment 2

As shown in Fig 2, the battery safety vent comprises a pressing ring 3, a film 4, a safety vent cover 5 and a pin 6.

In this embodiment, there is no base in the present embodiment. The film 4 and the pressing ring 3 are overlapped and welded on the battery cover plate 1.

Finally, the safety vent cover 5 is welded on the pressing ring 3.

The free head of the pin is flat and circular, the radius ratio of the free head of the pin 6 and the film 4 is about 1:7 and diamond particle of 200 mesh are distributed on the free head.

The other structures of the embodiment 2 are the same as those of embodiment 1.

## Claims

1. A battery, comprising:
an electric core,
a shell housing the electric core,
a cover plate (1) disposed on an end surface of the shell and formed with a gas releasing aperture (7); and
an explosion-proof battery safety vent disposed on the cover plate (1) and around the gas releasing aperture (7), the explosion-proof battery safety vent comprising:
a film (4) to be fixed on a battery cover plate (1), the film being adapted to swell towards a pin (6) and then get in touch with the free head of the pin (6), while the internal pressure of the battery reaches certain degree;
a safety vent cover (5) covering above the film (4) and having a pressure release aperture (8); and
the pin (6) disposed at a top of the safety vent cover (5), in which a free head of the pin (6) is blunt and points to the film (4),
**characterized in that**
the free head is adapted to continue to press the film, so that the film is under the internal pressure of the battery and the pressure of the free head, with increasing of the battery internal pressure.

2. The battery of claim 1, further comprising a base (2) to be fixed on the battery cover plate (1), in which the film (4) is fixed on the battery cover plate (1).

3. The battery of claim 1, further comprising a pressing ring (3) pressed at an edge of the film (4) and fixed with the film (4).

4. The battery of claim 1, wherein the free head of the pin (6) is flat and circular.

5. The battery of claim 1, wherein, the free head of the pin (6) is spherical.

6. The battery of claim 5, wherein the film (4) is circular, and the radius ratio of the free head and the film (4) is about 1: 7∼1: 10.

7. The battery of claim 1, wherein, the film (4) is stainless steel film.

8. The battery of claim 1, wherein the top of the safety vent cover (5) is formed with an inserting hole, in which the pin (6) is fixed.

## Patentansprüche

1. Batterie mit:
einem elektrischen Kern,
einer Hülle, welche den elektrischen Kern beherbergt,
einer Deckplatte (1), die an einer Endfläche der Hülle angeordnet ist, und mit einer Gas-Abgabeöffnung (7) versehen ist; und
einer explosionssicheren Batteriesicherheitsentlüftung, die an der Deckplatte (1) und um die Gas-Abgabeöffnung (7) angeordnet ist, wobei die Batteriesicherheitsentlüftung aufweist:
einen Film (4) der an einer Batterie-Deckplatte (1) zu befestigen ist, wobei der Film derart ausgelegt ist, dass er, während der Innendruck der Batterie ein gewisses Niveau erreicht, hin zu einem Stift (6) anschwellen und dann den freien Kopf des Stiftes (6) berühren kann;
eine Sicherheitsentlüftungsabdeckung (5), die den Film (4) oben abdeckt und eine Druck-Abgabeöffnung (8) aufweist; und
den Stift (6), der an einem oberen Ende der Sicherheitsentlüftungsabdeckung (5) angeordnet ist, in der ein freier Kopf des Stiftes (6) abgestumpft ist und hin zu dem Film (4) gerichtet ist,
**dadurch gekennzeichnet, dass**
der freie Kopf derart ausgelegt ist, dass er den Film fortlaufend mit Druck beaufschlagt, sodass der Film, mit ansteigendem Batterieinnendruck, dem Innendruck der Batterie und dem Druck des freien Kopfes ausgesetzt ist.

2. Batterie nach Anspruch 1, ferner mit einem Boden (2), der an der Batterie-Deckplatte (1) zu befestigen ist, und in dem der Film (4) an der Batterie-Deckplatte (1) befestigt ist.

3. Batterie nach Anspruch 1, ferner mit einem Pressring (3), der an einer Kante des Films (4) aufgepresst ist, und mit dem Film (4) befestigt ist.

4. Batterie nach Anspruch 1, bei welcher der freie Kopf des Stiftes (6) flach und kreisförmig ist.

5. Batterie nach Anspruch 1, bei welcher der freie Kopf des Stiftes (6) kugelförmig ist.

6. Batterie nach Anspruch 5, bei welcher der Film (4) kreisförmig ist und das Radius-Verhältnis des freien Kopfes und des Films (4) ungefähr 1:7∼1:10 beträgt.

7. Batterie nach Anspruch 1, bei welcher der Film (4) ein Edelstahlfilm ist.

8. Batterie nach Anspruch 1, bei der das obere Ende der Sicherheitsentlüftungsabdeckung (5) mit einer Einführausnehmung versehen ist, in welcher der Stift (6) befestigt ist.

## Revendications

1. Batterie, comprenant :
un noyau électrique,
une coque logeant le noyau électrique,
une plaque de couvercle (1) disposée sur une surface terminale de la coque et formée avec une ouverture d'évacuation des gaz (7) ; et
un évent de sécurité de batterie antidéflagrant disposé sur la plaque de couvercle (1) et autour de l'ouverture d'évacuation des gaz (7), l'évent de sécurité de batterie antidéflagrant comprenant :
un film (4) à fixer sur une plaque de couvercle de batterie (1), le film étant adapté pour gonfler vers une tige (6) et puis entrer en contact avec la tête libre de la tige (6), pendant que la pression interne de la batterie atteint un certain degré ;
un couvercle d'évent de sécurité (5) couvrant la partie supérieure du film (4) et ayant une ouverture d'évacuation de pression (8) ; et
la tige (6) disposée sur la partie supérieure du couvercle d'évent de sécurité (5), où une tête libre de la tige (6) est émoussée et pointe vers le film (4),
**caractérisée en ce que**
la tête libre est adaptée pour continuer à presser le film, de sorte que le film est sous la pression interne de la batterie et la pression de la tête libre, avec l'augmentation de la pression interne de la batterie

2. Batterie selon la revendication 1, comprenant en outre une base (2) à fixer sur la plaque de couvercle de batterie (1), où le film (4) est fixé sur la plaque de couvercle de batterie (1).

3. Batterie selon la revendication 1, comprenant en outre une bague de compression (3) pressée sur un bord du film (4) et fixée avec le film (4).

4. Batterie selon la revendication 1, dans laquelle la tête libre de la tige (6) est plate et circulaire.

5. Batterie selon la revendication 1, dans laquelle, la tête libre de la tige (6) est sphérique.

6. Batterie selon la revendication 5, dans laquelle le film (4) est circulaire, et le rapport de rayon entre la tête libre et le film (4) est d'environ 1: 7-1: 10.

7. Batterie selon la revendication 1, dans laquelle, le film (4) est un film en acier inoxydable.

8. Batterie selon la revendication 1, dans laquelle la partie supérieure du couvercle d'évent de sécurité (5) est formée avec un trou d'insertion, où la tige (6) est fixée.
